# EUROPEAN PATENT APPLICATION

(11) **EP 4 021 125 A1**
(43) Date of publication of application: **29.06.2022**
(21) Application number: 20854911.3
(22) Date of filing: 14.08.2020
(51) Int. Cl.: H04W 72/12, H04W 72/04, H04W 92/18

(54) **METHOD FOR CONFIGURING SIDELINK RESOURCES IN COMMUNICATION SYSTEM**

(30) Priority: 21.08.2019 US 201962889836 P; 12.08.2020 KR 20200101169
(71) Applicant: HYUNDAI MOTOR COMPANY, Seoul 06797 (KR); Kia Corporation, Seocho-gu Seoul 06797 (KR)
(72) Inventor: HAHN, Gene Back, Hwaseong-si, Gyeonggi-do 18280 (KR); SON, Hyuk Min, Iksan-si, Jeollabuk-do 54653 (KR)
(74) Representative: Hoffmann Eitle
(86) International application number: PCT/KR2020/010881
(87) International publication number: WO 2021/034044

(57) **Abstract**

A method for configuring sidelink resources in a communication system is disclosed. An operation method of a first terminal comprises the steps of: generating SCI including a time aggregation level indicating n time intervals, time resource allocation information indicating time resources used for transmission of data within the n time intervals, and frequency resource allocation information; transmitting the SCI to a second terminal; and transmitting, to the second terminal, the data in a PSSCH consisting of the time resources and frequency resources indicated by the frequency resource allocation information. Therefore, the performance of the communication system can be improved.

## Description

### BACKGROUND

### (a) Technical Field

The present disclosure relates to a sidelink communication technique, more particularly, to a technique for configuring sidelink resources in a communication system.

### (b) Description of the Related Art

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, sidelink data may be transmitted periodically or aperiodically. The sidelink data may be transmitted in a unicast scheme, a multicast scheme, a groupcast scheme, or a broadcast scheme. The size of the sidelink data may vary according to characteristics of a communication service. There is a need for methods (e.g., configuration methods) for allocating sidelink resources for efficiently transmitting the above-described sidelink data.

### SUMMARY

An objective of the present disclosure for solving the above-described problem is to provide a method for configuring sidelink resources for data transmission in a communication system.

An operation method of a first terminal, according to a first exemplary embodiment of the present disclosure for achieving the objective, may comprise: generating sidelink control information (SCI), the SCI including a time aggregation level indicating n time periods, time resource allocation information indicating time resources used for transmission of data within the n time periods, and frequency resource allocation information; transmitting the SCI to a second terminal; and transmitting the data to the second terminal on a physical sidelink shared channel (PSSCH) composed of the time resources and frequency resources indicated by the frequency resource allocation information, wherein n is a natural number equal to or greater than 1.

A plurality of time aggregation levels may be configured by higher layer signaling, and the time aggregation level included in the SCI may be one of the plurality of time aggregation levels.

The time resource allocation information may include at least one of an index of a start symbol of the time resources or information indicating a length of the time resources.

The frequency resource allocation information may include at least one of an index of a start resource block (RB) of the frequency resources or information indicating a number of RBs constituting the frequency resources.

A time offset may exist between the n time periods in time domain, and the time offset may be set by higher layer signaling.

The SCI may further include a frequency aggregation level indicating p frequency bands, the frequency resources may be located within the p frequency bands, and p may be a natural number equal to or greater than 1.

A plurality of frequency aggregation levels may be configured by higher layer signaling, and the frequency aggregation level included in the SCI may be one of the plurality of frequency aggregation levels.

A frequency offset may exist between the p frequency bands in frequency domain, and the frequency offset may be set by higher layer signaling.

Each of the n time periods may be one slot, and the frequency resources may be a resource block (RB) set.

The SCI may further include information indicating a retransmission scheme of the data, and the retransmission scheme may be a chase combining scheme or an incremental redundancy (IR) scheme.

An operation method of a first terminal, according to a second exemplary embodiment of the present disclosure for achieving the objective, may comprise: generating sidelink control information (SCI), the SCI including time resource allocation information, a frequency aggregation level indicating p frequency bands, and frequency resource allocation information indicating frequency resources used for transmission of data within the p frequency bands; transmitting the SCI to a second terminal; and transmitting the data to the second terminal on a physical sidelink shared channel (PSSCH) composed of the frequency resources and time resources indicated by the time resource allocation information, wherein p is a natural number equal to or greater than 1.

A plurality of frequency aggregation levels may be configured by higher layer signaling, and the frequency aggregation level included in the SCI may be one of the plurality of frequency aggregation levels.

A frequency offset may exist between the p frequency bands in frequency domain, and the frequency offset may be set by higher layer signaling.

The frequency resource allocation information may include at least one of an index of a start resource block (RB) of the frequency resources or information indicating a number of RBs constituting the frequency resources.

An operation method of a first terminal, according to a third exemplary embodiment of the present disclosure for achieving the objective, may comprise: receiving, from a base station, a higher layer message including a time aggregation level indicating n time periods; generating sidelink control information (SCI), the SCI including time resource allocation information indicating time resources used for transmission of data within the n time periods indicated by the time aggregation level, and frequency resource allocation information; transmitting the SCI to a second terminal; and transmitting the data to the second terminal on a physical sidelink shared channel (PSSCH) composed of the time resources and frequency resources indicated by the frequency resource allocation information, wherein n is a natural number equal to or greater than 1.

The higher layer message may further include a frequency aggregation level indicating p frequency bands, the frequency resources may be located within the p frequency bands, and p may be a natural number equal to or greater than 1.

The time aggregation level and the frequency aggregation level may be configured for each resource pool, and configuration information of the resource pool may be included in the higher layer message.

The higher layer message may further include at least one of an index of a start symbol of the time resources, information indicating a length of the time resources, a time offset between the n time periods, or combinations thereof.

The higher layer message may include at least one of an index of a start resource block (RB) of the frequency resources, information indicating a number of RBs constituting the frequency resources, a frequency offset between the p frequency bands, or combinations thereof.

The higher layer message may further include information indicating a retransmission scheme of the data, and the retransmission scheme may be a chase combining scheme or an incremental redundancy (IR) scheme.

According to the present disclosure, one piece of control information may include information element(s) indicating a plurality of time periods (e.g., aggregated time periods) and/or a plurality of frequency bands (e.g., aggregated frequency bands). Data may be transmitted using sidelink resources indicated by the one piece of control information. That is, since a plurality of time periods and/or a plurality of frequency bands may be used according to the size of data to be transmitted, the efficiency of using sidelink resources can be improved, and the performance of sidelink communication can be improved.

### BRIEF DESCRIPTION OF DRAWINGS

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a conceptual diagram illustrating a first exemplary embodiment of a method for allocating sidelink resources when a time aggregation level is 1 in a communication system.
FIG. 8 is a conceptual diagram illustrating a first exemplary embodiment of a method for allocating sidelink resources when a time aggregation level is 2 in a communication system.
FIG. 9 is a conceptual diagram illustrating a first exemplary embodiment of a method for allocating sidelink resources when a time aggregation level is 3 in a communication system.
FIG. 10 is a conceptual diagram illustrating a first exemplary embodiment of a method for allocating sidelink resources when a frequency aggregation level is 1 in a communication system.
FIG. 11 is a conceptual diagram illustrating a first exemplary embodiment of a method for allocating sidelink resources when a frequency aggregation level is 2 in a communication system.
FIG. 12 is a conceptual diagram illustrating a first exemplary embodiment of a method for allocating sidelink resources when a frequency aggregation level is 3 in a communication system.
FIG. 13 is a conceptual diagram illustrating a first exemplary embodiment of a method for allocating sidelink resources when a time aggregation level is 3 and a frequency aggregation level is 2 in a communication system.
FIG. 14 is a sequence chart illustrating a first exemplary embodiment of a method for configuring sidelink resources in a communication system.

### DETAILED DESCRIPTION

While the present invention is susceptible to various modifications and alternative forms, specific embodiments are shown by way of example in the drawings and described in detail. It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present invention will be described in detail with reference to the accompanying drawings. In describing the present invention, to facilitate the entire understanding, like numbers refer to like elements throughout the description of the figures and the repetitive description thereof will be omitted.

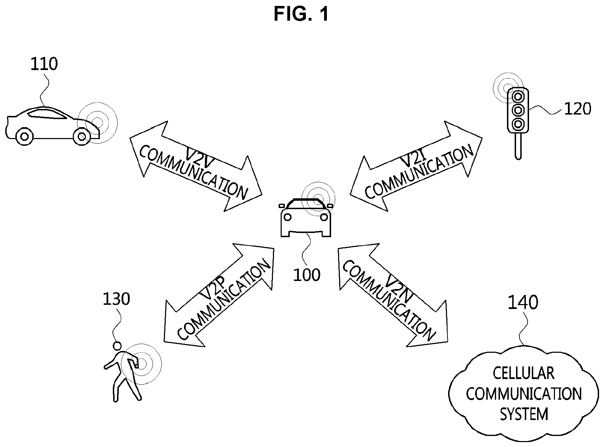

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

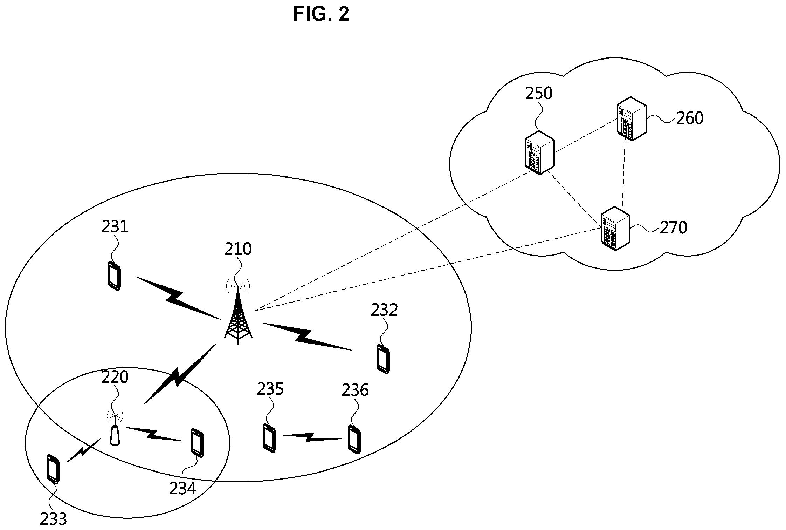

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

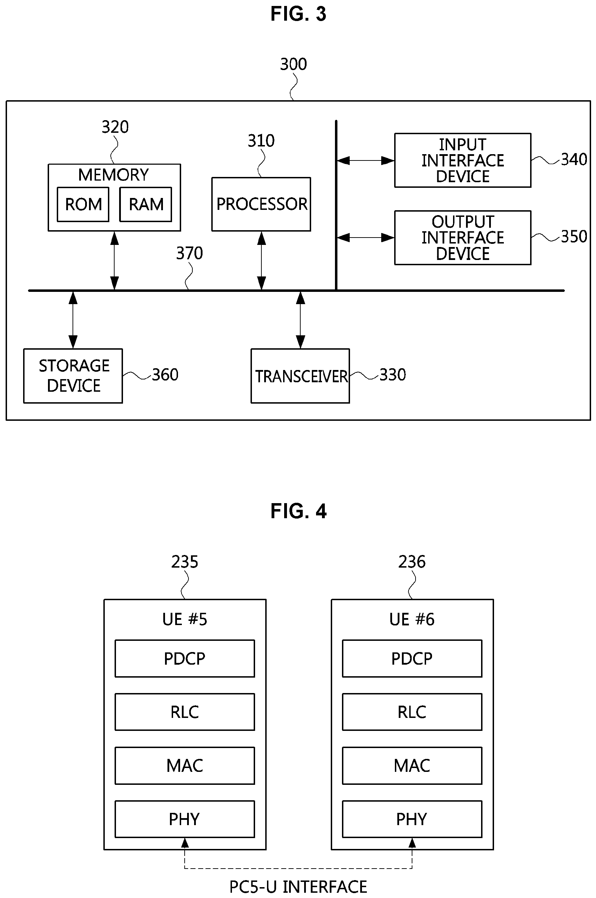

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

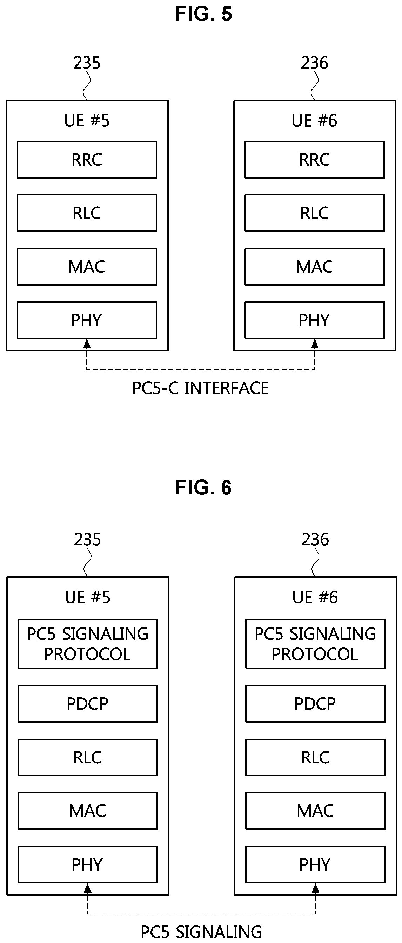

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, methods for configuring sidelink resources will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

In exemplary embodiments, sidelink communication methods between a transmitting terminal and a receiving terminal will be described. The transmitting terminal may refer to a terminal transmitting data (e.g., sidelink data), and the receiving terminal may refer to a terminal receiving the data.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

In the time domain, a scheduling unit (e.g., resource allocation unit) may be a symbol(s), a slot(s), or a subframe(s). One time period allocated by one piece of control information (e.g., time resource assignment included in a DCI and/or SCI) in the time domain may include symbol(s), slot(s), or subframe(s). One or more time periods may be configured by one piece of control information. The number of time periods configured by one piece of control information may vary according to the size of data to be transmitted. When the size of data to be transmitted is large, one piece of control information may be used to configure a plurality of time periods.

The number of time periods configured by one piece of control information may be indicated by a time aggregation level. When the time aggregation level is 1, the number of time periods configured by one piece of control information may be 1. When the time aggregation level is 2, the number of time periods configured by one piece of control information may be 2. That is, two aggregated time periods may be used for data transmission. When the time aggregation level is 3, the number of time periods configured by one piece of control information may be 3. That is, three aggregated time periods may be used for data transmission.

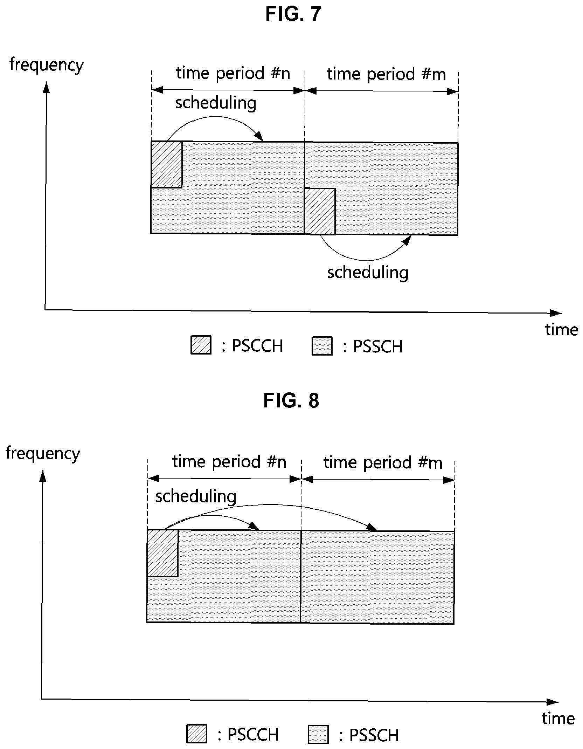

FIG. 7 is a conceptual diagram illustrating a first exemplary embodiment of a method for allocating sidelink resources when a time aggregation level is 1 in a communication system.

As shown in FIG. 7, when the time aggregation level is 1, one piece of control information (e.g., SCI) may be used to configure one time period. When the size of data to be transmitted from a first terminal to a second terminal is large, a plurality of time periods (e.g., a plurality of slots) may be required for transmission of the data. In this case, a plurality of time periods may be configured, and since the time aggregation level is 1, the plurality of time periods may be configured by different SCIs, respectively. Here, the size of time resources required for transmission of the data may be larger than the size of time resources constituting one PSSCH. Time resources (e.g., PSSCH) through which data is transmitted in each time period (e.g., each slot) may be limited to some time resources.

When data is transmitted in two time periods, the first terminal may transmit, to the second terminal, SCI #n including scheduling information (e.g., resource allocation information) of data on a PSCCH #n in a time period #n (e.g., slot #n), and transmit the data to the second terminal on a PSSCH #n indicated by the SCI #n in the time period #n. The second terminal may obtain the SCI #n by performing a monitoring operation (e.g., blind decoding operation) on the PSCCH #n in the time period #n, and may receive the data from the first terminal on the PSSCH #n indicated by the SCI #n in the time period #n.

In addition, the first terminal may transmit, to the second terminal, SCI #m including scheduling information (e.g., resource allocation information) of data on a PSCCH #m in a time period #m (e.g., slot #m), and may transmit the data to the second terminal on a PSSCH #m indicated by the SCI #m in the time period #m. The second terminal may obtain the SCI #m by performing a monitoring operation on the PSCCH #m in the time period #m, and receive the data from the first terminal on the PSSCH #m indicated by the SCI #m in the time period #m.

Here, each of n and m may be a natural number, and m may be greater than n. The PSCCH #n and the PSSCH #n may be a PSCCH and a PSSCH configured in the time period #n, respectively, and the SCI #n may be an SCI transmitted on the PSCCH #n. The PSCCH #m and the PSSCH #m may be a PSCCH and a PSSCH configured in the time period #m, respectively, and the SCI #m may be an SCI transmitted on the PSCCH #m. The time period #n and time period #m may be contiguous time periods or non-contiguous time periods. If the time period #n and time period #m are non-contiguous time periods, an offset (e.g., interval) between the time period #n and the time period #m may be indicated by one or a combination of two or more of higher layer signaling, MAC signaling, and PHY signaling.

FIG. 8 is a conceptual diagram illustrating a first exemplary embodiment of a method for allocating sidelink resources when a time aggregation level is 2 in a communication system.

As shown in FIG. 8, when the size of data to be transmitted from the first terminal to the second terminal is large, a plurality of time periods (e.g., a plurality of slots) may be required for transmission of data. When the time aggregation level is 2, one piece of control information (e.g., SCI) may be used to configure two time periods. Time resources (e.g., PSSCH) through which data is transmitted in each time period (e.g., each slot) may be limited to some time resources.

When the data is transmitted in two time periods, the first terminal may transmit, to the second terminal, SCI #n including scheduling information (e.g., resource allocation information) of data on a PSCCH #n in a time period #n (e.g., slot #n), may transmit the data to the second terminal on a PSSCH #n indicated by the SCI #n in the time period #n, and may transmit the data to the second terminal on a PSSCH #m indicated by the SCI #n in a time period #m. The second terminal may obtain the SCI #n by performing a monitoring operation on the PSCCH #n in the time period #n, may receive the data from the first terminal on the PSSCH #n indicated by the SCI #n in the time period #n, and may receive the data from the first terminal on the PSSCH #m indicated by the SCI #n in the time period #m.

The same data may be repeatedly transmitted on the PSSCHs #n and #m. In this case, the time aggregation level may be interpreted as indicating the number of repeated data transmissions. An MCS level (e.g., coding scheme) applied to the data transmitted on the PSSCH #n may be different from an MCS level (e.g., coding scheme) applied to the data transmitted on the PSSCH #m. In this case, the SCI #n may include information element(s) for allocation of the PSSCH #n and information element(s) for allocation of the PSSCH #m. The information element(s) for allocation of the PSSCH #n may be configured independently of the information element(s) for allocation of the PSSCH #m. The second terminal may perform a reception operation (e.g., decoding operation) of the data on the PSSCH #n based on the information element(s) for allocation of the PSSCH #n included in the SCI #n, and may perform a reception operation (e.g., decoding operation) of the data on the PSSCH #m based on the information element(s) for allocation of the PSSCH #m included in the SCI #n.

When the same data is received on the PSSCHs #n and #m, the second terminal may combine the data received on the PSSCH #n and the data received on the PSSCH #m by using a chase combining scheme. Alternatively, the data may be transmitted on the PSSCHs #n and #m based on an incremental redundancy (IR) scheme. In this case, the second terminal may combine the data received on the PSSCH #n and the data received on the PSSCH #m by using the IR scheme.

Here, each of n and m may be a natural number, and m may be greater than n. The PSCCH #n and the PSSCH #n may be a PSCCH and a PSSCH configured in the time period #n, and the SCI #n may be an SCI transmitted on the PSCCH #n. The PSSCH #m may be a PSSCH configured in the time period #m. The time period #n and the time period #m may be contiguous time periods or non-contiguous time periods. If the time period #n and the time period #m are non-contiguous time periods, an offset (e.g., interval) between the time period #n and time period #m may be indicated by one or a combination of two or more of higher layer signaling, MAC signaling, and PHY signaling.

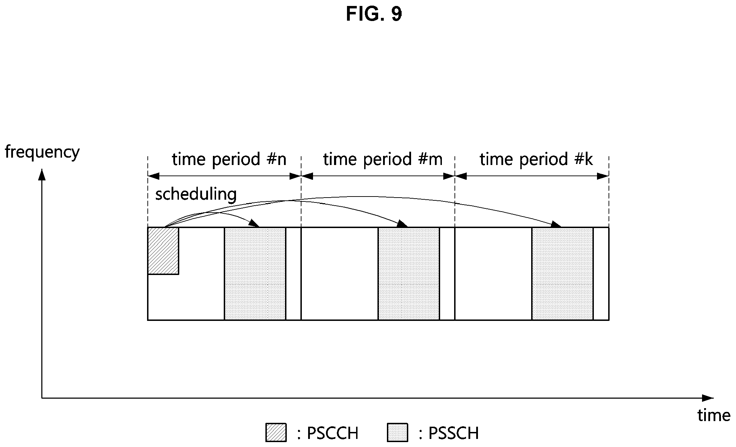

FIG. 9 is a conceptual diagram illustrating a first exemplary embodiment of a method for allocating sidelink resources when a time aggregation level is 3 in a communication system.

As shown in FIG. 9, when the size of data to be transmitted from the first terminal to the second terminal is large, a plurality of time periods (e.g., a plurality of slots) may be required for transmission of data. When the time aggregation level is 3, one piece of control information (e.g., SCI) may be used to configure three time periods. Time resources (e.g., PSSCH) through which data is transmitted in each time period (e.g., each slot) may be limited to some time resources.

When data is transmitted in three time periods, the first terminal may transmit, to the second terminal, SCI #n including scheduling information (e.g., resource allocation information) of data on a PSCCH #n in a time period #n (e.g., slot #n), may transmit the data to the second terminal on a PSSCH #n indicated by the SCI #n in the time period #n, may transmit the data to the second terminal on a PSSCH #m indicated by the SCI #n in a time period #m, and may transmit the data to the second terminal on a PSSCH #k indicated by the SCI #n in a time period #k.

The second terminal may obtain the SCI #n by performing a monitoring operation on the PSCCH #n in the time period #n, may receive the data from the first terminal on the PSSCH #n indicated by the SCI #n in the time period #n, may receive the data from the first terminal on the PSSCH #m indicated by the SCI #n in the time period #m, and may receive the data from the first terminal on the PSSCH #k indica ted by the SCI #n in the time period #k.

The same data may be repeatedly transmitted on the PSSCHs #n, #m, and #k. In this case, the time aggregation level may be interpreted as indicating the number of repeated data transmissions. MCS levels (e.g., coding schemes) respectively applied to the data transmitted on the PSSCHs #n, #m, and #k may be different from each other. In this case, the SCI #n may include information element(s) for allocation of the PSSCH #n, information element(s) for allocation of the PSSCH #m, and information element(s) for allocation of the PSSCH #k. The information element(s) for allocation of the PSSCH #n, information element(s) for allocation of the PSSCH #m, and information element(s) for allocation of the PSSCH #k may be configured independently of each other.

The second terminal may perform a reception operation (e.g., decoding operation) of the data on the PSSCH #n based on the information element(s) for allocation of the PSSCH #n included in the SCI #n, may perform a reception operation (e.g., decoding operation) of the data on the PSSCH #m based on the information element(s) for allocation of the PSSCH #m included in the SCI #n, and may perform a reception operation (e.g., decoding operation) of the data on the PSSCH #k based on the information element(s) for allocation of the PSSCH #k included in the SCI #n.

When the same data is received on the PSSCHs n, #m, and #k, the second terminal may combine the data received on the PSSCH #n, the data received on the PSSCH #m, and the data received on the PSSCH #k by using the chase combining scheme. Alternatively, the data may be transmitted on the PSSCHs #n, #m, and #k based on the IR scheme. In this case, the second terminal may combine the data received on the PSSCH #n, the data received on the PSSCH #m, and the data received on the PSSCH #k by using the IR scheme.

Here, each of n, m, and k may be a natural number, m may be greater than n, and k may be greater than m. The PSCCH #n and the PSSCH #n may be a PSCCH and a PSSCH configured in the time period #n, and the SCI #n may be an SCI transmitted on the PSCCH #n. The PSSCH #m may be a PSSCH configured in the time period #m, and the PSSCH #k may be a PSSCH configured in the time period #k. The time periods #n, #m, and #k may be contiguous time periods or non-contiguous time periods. When the time periods #n, #m, and #k are non-contiguous time periods, an offset (e.g., interval) between the time periods #n, #m, and #k may be indicated by one or a combination of two or more of higher layer signaling, MAC signaling, and PHY signaling.

Meanwhile, in the frequency domain, a scheduling unit may be a subcarrier(s), a resource block(s) (RB(s)), a subchannel(s), or an RB set(s). In exemplary embodiments, the RB may be a physical resource block (PRB) or a common resource block (CRB). Each of one subchannel and one RB set may include one or more RBs. A plurality of RBs included in each of one subchannel and one RB set may be contiguous RBs or non-contiguous RBs. One frequency band allocated by one piece of control information (e.g., frequency resource assignment included in a DCI and/or SCI) in the frequency domain may include subcarrier(s), RB(s), subchannel(s), or RB set(s).

The number of frequency bands (e.g., subchannels or RB sets) configured by one piece of control information may vary according to the size of data to be transmitted. When the size of data to be transmitted is large, a plurality of frequency bands may be configured by one piece of control information. The number of frequency bands configured by one piece of control information may be indicated by a frequency aggregation level. When the frequency aggregation level is 1, the number of frequency bands configured by one piece of control information may be 1. When the frequency aggregation level is 2, the number of frequency bands configured by one piece of control information may be 2. That is, two aggregated frequency bands may be used for data transmission. When the frequency aggregation level is 3, the number of frequency bands configured by one piece of control information may be 3. That is, three aggregated frequency bands may be used for data transmission.

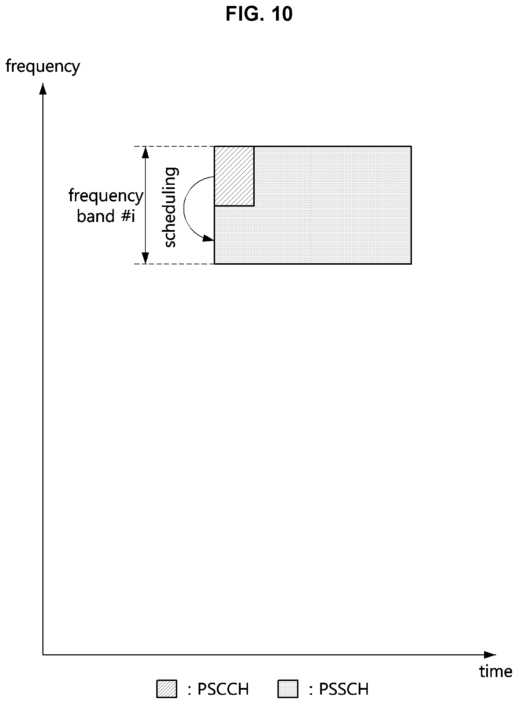

FIG. 10 is a conceptual diagram illustrating a first exemplary embodiment of a method for allocating sidelink resources when a frequency aggregation level is 1 in a communication system.

As shown in FIG. 10, when the frequency aggregation level is 1, one piece of control information (e.g., SCI) may be used to configure one frequency band (e.g., subchannel or RB set). The first terminal may transmit, to the second terminal, SCI #i including scheduling information (e.g., resource allocation information) of data on a PSCCH #i in a frequency band #i (e.g., RB set #i), and may transmit the data to the second terminal on a PSSCH #i indicated by the SCI #i in the frequency band #i. The second terminal may obtain the SCI #i by performing a monitoring operation on the PSCCH #i in the frequency band #i, and receive the data from the first terminal on the PSSCH #i indicated by the SCI #i in the frequency band #i.

Here, i may be a natural number, the PSCCH #i and the PSSCH #i may be a PSCCH and a PSSCH configured in the frequency band #i, respectively, and the SCI #i may be an SCI transmitted on the PSCCH #i.

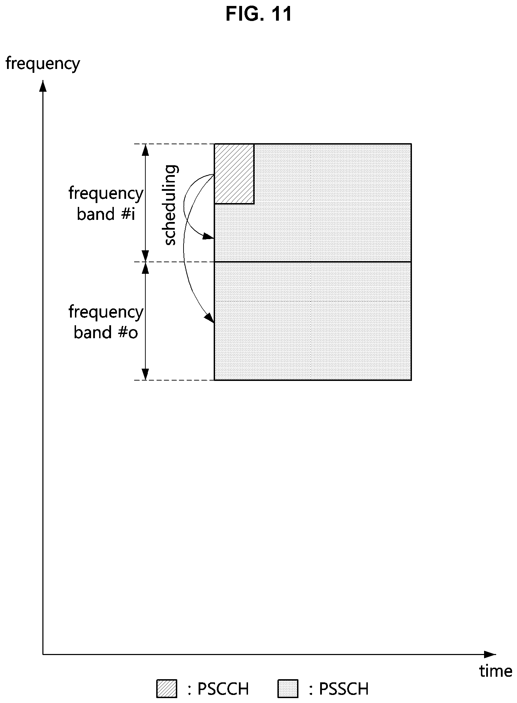

FIG. 11 is a conceptual diagram illustrating a first exemplary embodiment of a method for allocating sidelink resources when a frequency aggregation level is 2 in a communication system.

As shown in FIG. 11, when the size of data to be transmitted from the first terminal to the second terminal is large, a plurality of frequency bands (e.g., subchannels or RB sets) may be required for data transmission. Here, the size of frequency resources required for data transmission may be larger than the size of frequency resources constituting one PSSCH. When the frequency aggregation level is 2, one piece of control information (e.g., SCI) may be used to configure two frequency bands.

The first terminal may transmit, to the second terminal, SCI #i including scheduling information (e.g., resource allocation information) of data on a PSCCH #i in a frequency band #i (e.g., RB set #i), may transmit the data to the second terminal on a PSSCH #i indicated by the SCI #i in the frequency band #i, and may transmit the data to the second terminal on a PSSCH #o indicated by the SCI #i in a frequency band #o. The second terminal may obtain the SCI #i by performing a monitoring operation on the PSCCH #i in the frequency band #i, may receive the data from the first terminal on the PSSCH #i indicated by the SCI #i in the frequency band #i, and may receive the data from the first terminal on the PSSCH #o indicated by the SCI #i in the frequency band #o.

The aggregated frequency bands may be recognized as one PSSCH, and data may be mapped to the one PSSCH (e.g., aggregated frequency bands). The same data may be repeatedly transmitted on the PSSCH #i and the PSSCH #o. In this case, the second terminal may combine the data received on the PSSCH #i and the data received on the PSSCH #o based on the chase combining scheme. Alternatively, the data may be transmitted on the PSSCH #i and the PSSCH #o in the IR scheme. In this case, the second terminal may combine the data received on the PSSCH #i and the data received on the PSSCH #o based on the IR scheme. Here, the frequency aggregation level may be interpreted as the number of repeated data transmissions.

Here, each of i and o may be a natural number, and i may be greater than o. The PSCCH #i and the PSSCH #i may be a PSCCH and a PSSCH configured in the frequency band #i, respectively, and the SCI #i may be an SCI transmitted on the PSCCH #i. The PSSCH #o may be a PSSCH configured in the frequency band #o. The frequency band #i and the frequency band #o may be contiguous frequency bands or non-contiguous frequency bands. When the frequency band #i and the frequency band #o are non-contiguous frequency bands, an offset (e.g., interval) between the frequency band #i and the frequency band #o may be indicated by one or a combination of two or more of higher layer signaling, MAC signaling, and PHY signaling.

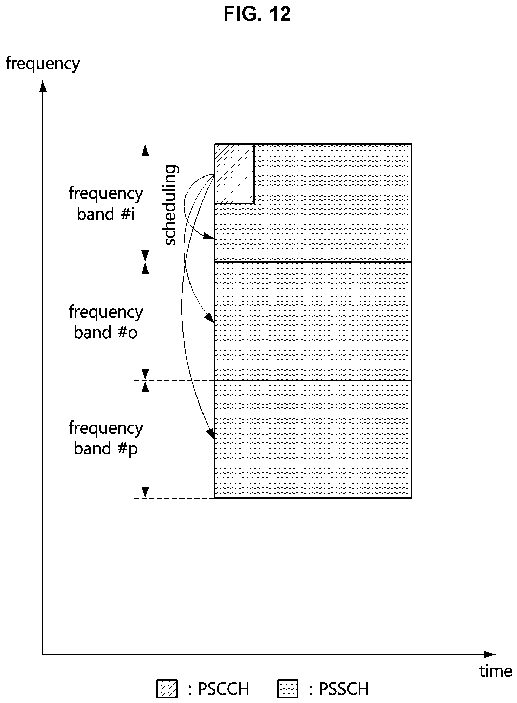

FIG. 12 is a conceptual diagram illustrating a first exemplary embodiment of a method for allocating sidelink resources when a frequency aggregation level is 3 in a communication system.

As shown in FIG. 12, when the size of data to be transmitted from the first terminal to the second terminal is large, a plurality of frequency bands (e.g., subchannels or RB sets) may be required for data transmission. Here, the size of frequency resources required for data transmission may be larger than the size of frequency resources constituting one PSSCH. When the frequency aggregation level is 3, one piece of control information (e.g., SCI) may be used to configure three frequency bands.

The first terminal may transmit, to the second terminal, SCI #i including scheduling information (e.g., resource allocation information) of data on a PSCCH #i in a frequency band #i (e.g., RB set #i), may transmit the data to the second terminal on a PSSCH #i indicated by the SCI #i in the frequency band #i, may transmit the data to the second terminal on a PSSCH #o indicated by the SCI #i in a frequency band #o, and may transmit the data to the second terminal on a PSSCH #p indicated by the SCI #i in a frequency band #p. The second terminal may obtain the SCI #i by performing a monitoring operation on the PSCCH #i in the frequency band #i, may receive the data from the first terminal on the PSSCH #i indicated by the SCI #i in the frequency band #i, may receive the data from the first terminal on the PSSCH #o indicated by the SCI #i in the frequency band #o, and may receive the data from the first terminal on the PSSCH #p indicated by the SCI #i in the frequency band #p.

The aggregated frequency bands may be recognized as one PSSCH, and the data may be mapped to the one PSSCH (e.g., aggregated frequency bands). The same data may be repeatedly transmitted on the PSSCH #i, PSSCH #o, and PSSCH #p. In this case, the second terminal may combine the data received on the PSSCH #i, the data received on the PSSCH #o, and the data received on the PSSCH #p based on the chase combining scheme. Alternatively, the data may be transmitted on the PSSCH #i, PSSCH #o, and PSSCH #p in the IR scheme. In this case, the second terminal may combine the data received on the PSSCH #i, the data received on the PSSCH #o, and the data received on the PSSCH #p based on the IR scheme. Here, the frequency aggregation level may be interpreted as the number of repeated data transmissions.

Here, each of i, o, and p may be a natural number, o may be greater than p, and i may be greater than o. The PSCCH #i and PSSCH #i may be a PSCCH and a PSSCH configured in the frequency band #i, and the SCI #i may be an SCI transmitted on the PSCCH #i. The PSSCH #o may be a PSSCH configured in the frequency band #o, and the PSSCH #p may be a PSSCH configured in the frequency band #p. The frequency band #i, frequency band #o, and frequency band #p may be contiguous frequency bands or non-contiguous frequency bands. When the frequency band #i, frequency band #o, and frequency band #p are non-contiguous frequency bands, an offset (e.g., interval) between the frequency band #i, frequency band #o, and frequency band #p may be indicated by one or a combination of two or more of signaling, MAC signaling, and PHY signaling.

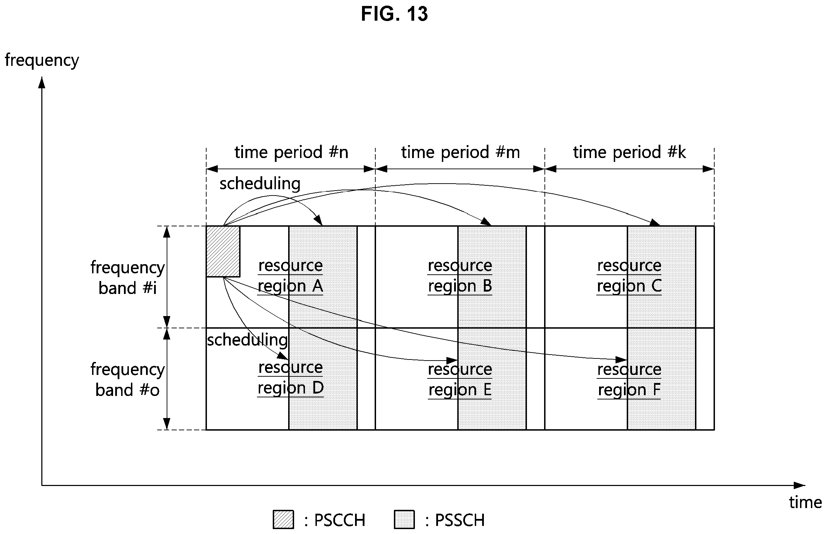

FIG. 13 is a conceptual diagram illustrating a first exemplary embodiment of a method for allocating sidelink resources when a time aggregation level is 3 and a frequency aggregation level is 2 in a communication system.

As shown in FIG. 13, an operation of aggregating time periods and an operation of aggregating frequency bands may be used together. When the time aggregation level is 3, three time periods may be aggregated. When the frequency aggregation level is 2, two frequency bands may be aggregated. In this case, one piece of control information (e.g., SCI) may be used to configure six resource regions. A resource region A may be composed of a time period #n and a frequency band #i, a resource region B may be composed of a time period #m and the frequency band #i, and a resource region C may be composed of a time period #k and the frequency band #i. A resource region D may be composed of the time period #n and a frequency band #o, a resource region E may be composed of the time period #m and the frequency band #o, and a resource region F may be composed of the time period #k and the frequency band #o.

The first terminal may transmit, to the second terminal, SCI including scheduling information (e.g., resource allocation information) of data on a PSCCH in the resource region A, and may transmit the data to the second terminal on PSSCHs indicated by the SCI in the resource regions A, B, C, D, E, and F, respectively. The second terminal may obtain the SCI by performing a monitoring operation on the PSCCH in the resource region A, and receive the data from the first terminal on the PSSCHs indicated by the SCI in the resource regions A, B, C, D, E, and F, respectively.

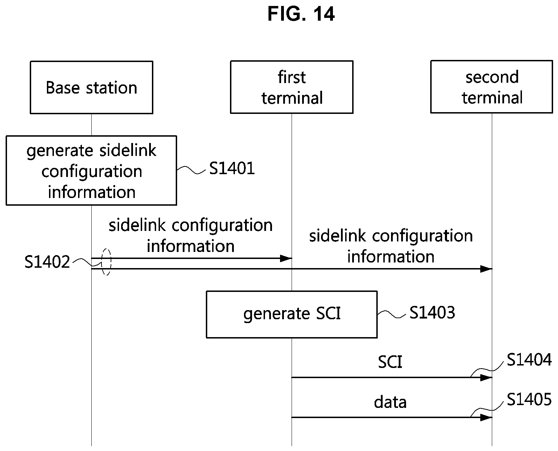

FIG. 14 is a sequence chart illustrating a first exemplary embodiment of a method for configuring sidelink resources in a communication system.

As shown in FIG. 14, a communication system may include a base station, a first terminal, and a second terminal. The base station may be the base station 210 shown in FIG. 2, the first terminal may be the UE 235 shown in FIG. 2, and the second terminal may be the UE 236 shown in FIG. 2. The first terminal and/or the second terminal may be located within a coverage of the base station. Alternatively, the first terminal and/or the second terminal may be located outside the coverage of the base station. Each of the base station, the first terminal, and the second terminal may be configured identically or similarly to the communication node 300 shown in FIG. 3. The first terminal and/or the second terminal may support the protocol stacks shown in FIGS. 4 to 6.

The base station may generate sidelink configuration information (S1401). The sidelink configuration information may include time domain allocation information, frequency domain allocation information, and/or retransmission scheme information. The time domain allocation information may indicate time resources (e.g., time resources of PSSCH(s)) used for data transmission and reception. The frequency domain allocation information may indicate frequency resources (e.g., frequency resources of PSSCH(s)) used for data transmission and reception. The retransmission scheme information may indicate a data retransmission scheme. For example, the retransmission scheme information may indicate the chase combining scheme and/or the IR scheme. Alternatively, the retransmission scheme information may indicate that the chase combining scheme and the IR scheme are not used.

The time domain allocation information may include one or more information elements among information elements defined in Table 3 below. The time domain allocation information may be configured by one or a combination of two or more of cell-specific signaling, UE-specific signaling, resource pool-specific signaling, and sidelink (SL)-specific signaling.

**[Table 3]**

| **Information element** | **Description** |
|---|---|
| Time aggregation level | Time aggregation level indicates the number of time period(s) allocated by one piece of control information. |
| Start symbol information | Start symbol information indicates a start symbol of time resources (e.g., PSSCH) through which data can be transmitted within a time period. |
| Length information | Length information indicates a duration of time resources (e.g., PSSCH) through which data can be transmitted within a time period or the number of symbols constituting the time resources. |
| Start and length indicator (SLIV) | SLIV indicates a start symbol and a length of time resources (e.g., PSSCH) through which data can be transmitted within a time period. |

The time aggregation level may be set to one or more values. For example, the time aggregation level may be set to one or more values among {1, 2, 3, 4}. When the time aggregation level is set to one value, one value indicated by the time aggregation level may be used in sidelink communication between terminals. When the time aggregation level is set to 2 and a scheduling unit is one slot, two slots may be allocated by one piece of control information. The two slots allocated by one piece of control information may be contiguous slots or non-contiguous slots. A time offset indicating an interval between a plurality of slots allocated by one piece of control information may be included in Table 3.

When the time aggregation level is set to a plurality of values, one value among the plurality of values may be used in sidelink communication between terminals. The plurality of values may mean candidate time aggregation levels. Here, one value of the time aggregation level may be indicated by one or a combination of two or more of another higher layer signaling, MAC signaling, and PHY signaling. For example, the time aggregation levels (e.g., candidate time aggregation levels) may be set to {2, 3}, and one of {2, 3} may be indicated through one or a combination of one or more of another higher layer signaling, MAC signaling, and PHY signaling.

The start symbol information may indicate an index of a start symbol within a time period (e.g., slot). For example, when some time resources within a slot are used for data transmission/reception, the start symbol information may indicate an index of a start symbol of the some time resources. Alternatively, the start symbol information may indicate a symbol offset between a specific symbol (e.g., start symbol or end symbol) within time resource(s) through which control information is transmitted and received and a specific symbol (e.g., start symbol or end symbol) within time resources through which data scheduled by the control information is transmitted and received.

The start symbol information may indicate one or more start symbol indices or one or more symbol offsets. When the start symbol information indicates one start symbol index or one symbol offset, one start symbol index or one symbol offset indicated by the start symbol information may be used in sidelink communication between terminals. When the start symbol information indicates a plurality of start symbol indices or a plurality of symbol offsets, one start symbol index among the plurality of start symbol indices or one symbol offset among the plurality of symbol offsets may be used in sidelink communication between terminals. Here, one start symbol index or one symbol offset may be indicated by one or a combination of two or more of another higher layer signaling, MAC signaling, and PHY signaling. The plurality of start symbol indices may mean candidate start symbol indices, and the plurality of symbol offsets may mean candidate symbol offsets.

When some time resources are used for data transmission/reception within a time period (e.g., slot), the length information may indicate the length of the some time resources. The length information may be set in units of symbols. The length information may indicate one or more lengths. When the length information indicates one length, one length indicated by the length information may be used in sidelink communication between terminals. When the length information indicates a plurality of lengths (e.g., candidate lengths), one length among the plurality of lengths may be used in sidelink communication between terminals. Here, one length may be indicated by one or a combination of two or more of another higher layer signaling, MAC signaling, and PHY signaling.

When some time resources are used for data transmission/reception within a time period (e.g., slot), the SLIV may indicate a start symbol and a length of the some time resources. The SLIV may be set to one or more values. When the SLIV indicates one value, one value indicated by the SLIV may be used in sidelink communication between terminals. When the SLIV indicates a plurality of values, one value among the plurality of values may be used in sidelink communication between terminals. The plurality of values of the SLIV may mean candidate SLIVs. Here, the one value of SLIV may be indicated by one or a combination of two or more of another higher layer signaling, MAC signaling, and PHY signaling.

Meanwhile, the time domain allocation information may be configured for each resource pool (e.g., SL resource pool). For example, when aggregated time periods are used for sidelink communication, the time domain allocation information may be configured as shown in Table 4 below. In addition, Table 4 may further include retransmission scheme information.

**[Table 4]**

| | **Time aggregation level** | **Start symbol** | **length** | **SLIV** | **Retransmission scheme** |
|---|---|---|---|---|---|
| Resource pool #1 | 1 | 3 | 6 | First value | N/A |
| Resource pool #2 | 2 | 3 | 7 | Second value | Chase combining |
| Resource pool #3 | 2,3 | 4 | 4 | Third value | IR |
| Resource pool #4 | 4 | 5 | 4 | Fourth value | IR |

The time aggregation level in each resource pool may be set to a plurality of values. In this case, one time aggregation level used for sidelink communication may be indicated by one or a combination of two or more of another higher layer signaling, MAC signaling, and PHY signaling. The start symbol index may indicate a relative position based on a specific slot or a specific symbol. When a plurality of start symbols are configured in each resource pool, one start symbol used for sidelink communication may be indicated by one or a combination of two or more of another higher layer signaling, MAC signaling, and PHY signaling.

All symbols within a time period (e.g., slot) may be used for data transmission. Alternatively, some symbols within a time period may be used for data transmission. In this case, the some symbols may be indicated by one or a combination of two or more of a start symbol, a length, and an SLIV.

Alternatively, the time domain allocation information may be configured for each time aggregation pattern. For example, when aggregated time periods are used for sidelink communication, the time domain allocation information may be configured as shown in Table 5 below. In addition, Table 5 may further include retransmission scheme information.

**[Table 5]**

| | **Time aggregation level** | **Start symbol** | **length** | **SLIV** | **Retransmission scheme** |
|---|---|---|---|---|---|
| Time aggregation pattern # 1 | 1 | 3 | 6 | First value | N/A |
| Time aggregation pattern #2 | 2 | 3 | 7 | Second value | Chase combining |
| Time aggregation pattern #3 | 3 | 4 | 4 | Third value | IR |
| Time aggregation pattern #4 | 4 | 5 | 4 | Fourth value | IR |

The configuration information of the time aggregation pattern may be included in sidelink configuration information. The time aggregation pattern may be indicated by one or a combination of two or more of cell-specific signaling, UE-specific signaling, resource pool-specific signaling, and SL-specific signaling. For example, time aggregation patterns #1 to #4 may be configured by higher layer signaling, and information elements (e.g., indicator having a size of 2 bits) included in SCI may indicate one time aggregation pattern among the time aggregation patterns #1 to #4. The time aggregation pattern used for sidelink communication may be indicated by an explicit scheme, an implicit scheme, or a combination of an explicit scheme and an implicit scheme. The configuration information defined in Tables 3 to 5 may be indicated or changed by higher layer signaling, MAC signaling, and/or PHY signaling.

Meanwhile, the frequency domain allocation information may include one or more information elements among information elements defined in Table 6 below. In Table 6, a combination of start frequency information and size information may indicate a PSSCH transmittable region. The frequency domain allocation information may be configured by one or a combination of two or more of cell-specific signaling, UE-specific signaling, resource pool-specific signaling, and SL-specific signaling.

**[Table 6]**

| **Information element** | **Description** |
|---|---|
| Frequency | Frequency aggregation level indicates the number of frequency |
| aggregation level | band(s) allocated by one piece of control information. |
| Start frequency information | Start frequency information indicates a start subcarrier, start PRB, or start CRB of frequency resources (e.g., PSSCH) through which data can be transmitted within a frequency band. |
| Size information | Size information indicates a size of frequency resources (e.g., PSSCH) through which data can be transmitted within a frequency band or the number of RBs constituting the frequency resources. |

The frequency aggregation level may be set to one or more values. For example, the frequency aggregation level may be set to one or more values among {1, 2, 3, 4}. When the frequency aggregation level is set to one value, one value indicated by the frequency aggregation level may be used in sidelink communication between terminals. When the frequency aggregation level is set to 2 and a scheduling unit is one RB set, two RB sets may be allocated by one piece of control information. The two RB sets allocated by one piece of control information may be contiguous RB sets or non-contiguous RB sets. A frequency offset indicating an interval between a plurality of RB sets allocated by one piece of control information may be included in Table 6.

When the frequency aggregation level is set to a plurality of values, one value among the plurality of values may be used in sidelink communication between terminals. The plurality of values may mean candidate frequency aggregation levels. Here, one value of the frequency aggregation level may be indicated by one or a combination of two or more of another higher layer signaling, MAC signaling, and PHY signaling. For example, the frequency aggregation level may be set to {2, 3}, and a value of one of {2, 3} may be indicated by one or a combination of two or more of another higher layer signaling, MAC signaling, and PHY signaling.

The start frequency information may indicate an index of a start frequency within a frequency band (e.g., RB set). For example, when some frequency resources within an RB set are used for data transmission/reception, the start frequency information may indicate a start subcarrier index or a start RB index (e.g., start PRB index or start CRB index) of the some frequency resources. Alternatively, the start frequency information may indicate a frequency offset between a specific frequency resource (e.g., start subcarrier, end subcarrier, start RB, or end RB) through which control information is transmitted and received and a specific frequency resource (e.g., start subcarrier, end subcarrier, start RB, or end RB) through which data scheduled by the control information is transmitted and received. Alternatively, the start frequency information may indicate a frequency offset between a reference point and a specific frequency resource (e.g., start subcarrier, end subcarrier, start RB, or end RB) through which the data is transmitted and received.

The start frequency information may indicate one or more start subcarrier indices, start RB indices, or frequency offsets. When the start frequency information indicates one start subcarrier index, one start RB index, or one frequency offset, the one start subcarrier index, one start RB index, or one frequency offset indicated by the start frequency information may be used in sidelink communication between terminals. When the start frequency information includes a plurality of start subcarrier indices (e.g., candidate start subcarrier indices), a plurality of start RB indices (e.g., candidate start RB indices), or a plurality of frequency offsets (e.g., candidate frequency offsets), one start subcarrier index among the plurality of start subcarrier indices, one start RB index among the plurality of start RB indices, or one frequency offset among the plurality of frequency offsets may be used in sidelink communication between terminals. Here, the one start subcarrier index, one start RB index, or one frequency offset may be indicated by one or a combination of two or more of another higher layer signaling, MAC signaling, and PHY signaling.

When some frequency resources within a frequency band (e.g., RB set) are used for data transmission/reception, the size information may indicate the size of the some frequency resources or the number of RBs constituting the some frequency resources. The size information may indicate one or more sizes of the RBs or one or more numbers of the RBs. When the size information indicates one size or one RB number, one size or one RB number indicated by the size information in sidelink communication between terminals may be used. When the size information indicates a plurality of sizes (e.g., candidate sizes) or a plurality of numbers of RBs (e.g., candidate RB numbers), one size among the plurality of sizes or one number of RBs of the plurality of numbers of RBs may be used in sidelink communication between terminals. Here, one size or one RB number or one number of RBs may be indicated by one or a combination of two or more of another higher layer signaling, MAC signaling, and PHY signaling.

Meanwhile, the frequency domain allocation information may be configured for each resource pool (e.g., SL resource pool). For example, when aggregated frequency bands are used for sidelink communication, the frequency domain allocation information may be configured as shown in Table 7 below. In addition, Table 7 may further include retransmission scheme information.

**[Table 7]**

| | **Frequency aggregation level** | **Start Frequency** | **Size** | **Retransmission scheme** |
|---|---|---|---|---|
| Resource pool #1 | 1,2 | 1 | 3 | N/A |
| Resource pool #2 | 1,2,4 | 1 | 4 | Chase combining |
| Resource pool #3 | 1 | 2 | 2 | IR |
| Resource pool #4 | 4 | 3 | 2 | IR |

In each resource pool, the frequency aggregation level may be set to a plurality of values. In this case, one frequency aggregation level used for sidelink communication may be indicated by one or a combination of two or more of another higher layer signaling, MAC signaling, and PHY signaling. The start frequency index may indicate a relative position based on a specific subcarrier or a specific RB. When a plurality of start frequencies are configured for each resource pool, one start frequency used for sidelink communication may be indicated by one or a combination of two or more of another higher layer signaling, MAC signaling, and PHY signaling.

A combination of the start frequency information and the size information may indicate a PSSCH transmittable region. A PSSCH transmittable region A for a resource pool #1 may be configured, a PSSCH transmittable region B for a resource pool #2 may be configured, a PSSCH transmittable region C for a resource pool #3 may be configured, and a PSSCH transmittable region D for a resource pool #4 may be configured. One or more PSSCH transmittable regions may be configured for each frequency aggregation level. Information elements may be mapped one-to-one. A signaling operation of the frequency aggregation level may be performed independently of a signaling operation of the start frequency information and the size information. When a PSSCH transmittable region is configured in the entire frequency band, a combination of the start frequency information and the size information may indicate the entire frequency band.

Alternatively, the frequency domain allocation information may be configured for each frequency aggregation pattern. For example, when aggregated frequency bands are used for sidelink communication, the frequency domain allocation information may be configured as shown in Table 8 below. In addition, Table 8 may further include retransmission scheme information.

**[Table 8]**

| | **Frequency aggregation level** | **Start Frequency** | **Size** | **Retransmission scheme** |
|---|---|---|---|---|
| Frequency aggregation pattern #1 | 1,2 | 1 | 3 | N/A |
| Frequency aggregation pattern #2 | 1,2,4 | 1 | 4 | Chase combining |
| Frequency aggregation pattern #3 | 1 | 2 | 2 | IR |
| Frequency aggregation pattern #4 | 4 | 3 | 2 | IR |

The configuration information of the frequency aggregation pattern may be included in sidelink configuration information. The frequency aggregation pattern may be indicated by one or a combination of two or more of cell-specific signaling, UE-specific signaling, resource pool-specific signaling, and SL-specific signaling. For example, frequency aggregation patterns #1 to #4 may be configured by higher layer signaling, and information elements (e.g., indicator having a size of 2 bits) included in SCI may indicate one frequency aggregation pattern among the frequency aggregation patterns #1 to #4. The frequency aggregation pattern used for sidelink communication may be indicated by an explicit scheme, an implicit scheme, or a combination of an explicit scheme and an implicit scheme. The configuration information defined in Tables 6 to 8 may be indicated or changed by higher layer signaling, MAC signaling, and/or PHY signaling.

Meanwhile, aggregated time periods and aggregated frequency bands may be used for sidelink communication. In this case, the time domain allocation information and the frequency domain allocation information may be configured for each resource pool (e.g., SL resource pool). The time domain allocation information and the frequency domain allocation information may be configured as shown in Table 9 below. In addition, Table 9 may further include retransmission scheme information.

**[Table 9]**

| | **Time aggregation level** | **Start Symbol** | **length** | **SLIV** | **Frequency aggregation level** | **Start frequency** | **Size** | **Retransmission scheme** |
|---|---|---|---|---|---|---|---|---|
| Resource pool #1 | 1 | 3 | 6 | First value | 2 | 1 | 3 | N/A |
| Resource pool #2 | 2 | 3 | 7 | Second value | 2 | 1 | 4 | Chase combining |
| Resource pool #3 | 3 | 4 | 4 | Third value | 2 | 2 | 2 | IR |
| Resource pool #4 | 4 | 5 | 4 | Fourth value | 1 | 3 | 2 | IR |

A plurality of time aggregation levels and a plurality of frequency aggregation levels may be configured for each resource pool. In this case, one time aggregation level and one frequency aggregation level used for sidelink communication may be indicated by an SCI. The start symbol information may indicate a relative position based on a specific slot or a specific symbol. A plurality of start symbols may be configured for each resource pool, and one start symbol used for sidelink communication may be indicated by an SCI. A combination of the start symbol information and the length information may indicate some resources or all resources of a time period.

A combination of the start frequency information and the size information may indicate a PSSCH transmittable region in the frequency domain. The PSSCH transmittable region may be configured for each resource pool. A PSSCH transmittable region A may be configured for a resource pool #1, a PSSCH transmittable region B may be configured for a resource pool #2, a PSSCH transmittable region C may be configured for a resource pool #3, and a PSSCH transmittable region D may be configured for a resource pool #4. The start frequency information may indicate a relative position based on a specific frequency resource (e.g., subcarrier, PRB, CRB, reference point).

One or more PSSCH transmittable regions may be configured for each frequency aggregation level. Information elements may be mapped one-to-one. A signaling operation of the frequency aggregation level may be performed independently of a signaling operation of the start frequency information and the size information. When a PSSCH transmittable region is configured in the entire frequency band, a combination of the start frequency information and the size information may indicate the entire frequency band.

The configuration information of Table 9 (e.g., one or more information elements) may be indicated or changed by higher layer signaling, MAC signaling, and/or PHY signaling. The configuration information of Table 9 (e.g., one or more information elements) may be indicated by one or a combination of two or more of cell-specific signaling, UE-specific signaling, resource pool-specific signaling, and SL-specific signaling..

Alternatively, the time domain allocation information and the frequency domain allocation information may be configured for each time/frequency aggregation pattern. The time domain allocation information and the frequency domain allocation information may be configured as shown in Table 10 below. In addition, Table 10 may further include retransmission scheme information.

**[Table 10]**

| | **Time aggregation level** | **Start Symbol** | **length** | **SLIV** | **Frequency aggregation level** | **Start frequency** | **Size** | **Retransmission scheme** |
|---|---|---|---|---|---|---|---|---|
| Time/freq aggregation pattern #1 | 1 | 3 | 6 | First value | N/A | 1 | 3 | N/A |
| Time/freq aggregation pattern #2 | 2 | 3 | 7 | Second value | N/A | 1 | 4 | Chase combining |
| Time/freq aggregation pattern #3 | 3 | 4 | 4 | Third value | N/A | 2 | 2 | IR |
| Time/freq aggregation pattern #4 | 4 | 5 | 4 | Fourth value | N/A | 3 | 2 | IR |
| Time/freq aggregation pattern #5 | N/A | 4 | 5 | First value | 1, 2 | 1 | 3 | N/A |
| Time/freq aggregation pattern #6 | N/A | 2 | 7 | Second value | 1,2,4 | 2 | 3 | N/A |
| Time/freq aggregation pattern #7 | 1 | 4 | 4 | Third value | 2 | 2 | 2 | IR |
| Time/freqaggregatio n pattern #8 | 4 | 2 | 5 | Fourth value | 1 | 3 | 2 | IR |

The time/frequency aggregation pattern may be indicated by one or a combination of two or more of cell-specific signaling, UE-specific signaling, resource pool-specific signaling, and SL-specific signaling. The configuration information of Table 10 (e.g., one or more information elements) may be indicated or changed by higher layer signaling, MAC signaling, and/or PHY signaling. When time/frequency aggregation patterns #1 to #8 are configured by higher layer signaling, one time/frequency aggregation pattern used for sidelink communication may be indicated by an information element (e.g., indicator having a size of 3 bits) included in an SCI. One time/frequency aggregation pattern may be indicated by an explicit scheme, an implicit scheme, or a combination of an explicit scheme and an implicit scheme.

Meanwhile, the base station may transmit a higher layer message including the sidelink configuration information generated in the step S1401 (S1402). Alternatively, the sidelink configuration information may be transmitted through one or a combination of two or more of higher layer signaling, MAC signaling, and PHY signaling. The terminal(s) (e.g., the first terminal and/or the second terminal) may receive the higher layer message from the base station, and may identify the sidelink configuration information included in the higher layer message. Alternatively, the terminal(s) may obtain the sidelink configuration information by receiving the higher layer message, MAC message, and/or PHY message. The terminal(s) may obtain the time domain allocation information, frequency domain allocation information, and/or retransmission scheme information included in the sidelink configuration information.

The time domain allocation information may include one or more information elements defined in Table 3. The time domain allocation information (or 'time domain allocation information and retransmission scheme information') may be configured for each resource pool as shown in Table 4. Alternatively, the time domain allocation information (or 'time domain allocation information and retransmission scheme information') may be configured for each time aggregation pattern as shown in Table 5. The frequency domain allocation information may include one or more information elements defined in Table 6. The frequency domain allocation information (or 'frequency domain allocation information and retransmission scheme information') may be configured for each resource pool as shown in Table 7. Alternatively, the frequency domain allocation information (or 'frequency domain allocation information and retransmission scheme information') may be configured for each frequency aggregation pattern as shown in Table 8. The time domain allocation information, frequency domain allocation information, and retransmission scheme information may be configured for each resource pool as shown in Table 9. Alternatively, the time domain allocation information, frequency domain allocation information, and retransmission scheme information may be configured for each time/frequency aggregation pattern as shown in Table 10.

When there is data to be transmitted from the first terminal to the second terminal, the first terminal may generate an SCI including scheduling information of the data (S1403). The SCI generated in the step S1403 may include a first-stage SCI or a first-stage SCI and a second-stage SCI. The SCI (e.g., first-stage SCI and/or second-stage SCI) may include one or more information elements listed in Table 11 below.

**[Table 11]**

| | Information element |
|---|---|
| SCI | Priority information |
| | Frequency resource allocation information |
| | Time resource allocation information |
| | Resource reservation period information |
| | DMRS pattern information |
| | Second-stage SCI format information |
| | Beta offset indicator |
| | Number of DMRS ports |
| | MCS information |
| | Time aggregation level |
| | Frequency aggregation level |
| | Retransmission scheme information |
| | Resource pool information |
| | Time aggregation pattern |
| | Frequency aggregation pattern |
| | Time/frequency aggregation pattern |

In Table 11, the time aggregation level and/or the time aggregation pattern may be included in the time resource allocation information, and the frequency aggregation level and/or the frequency aggregation pattern may be included in the frequency resource allocation information. One or more information elements among the time aggregation level, frequency aggregation level, retransmission scheme information, resource pool information, time aggregation pattern, frequency aggregation pattern, and time/frequency aggregation pattern described in Table 11 may be included in the second-stage SCI instead of the first-stage SCI.

The frequency resource allocation information may include information indicating the start frequency information and/or size information described in Table 6. The time resource allocation information may include information indicating the start symbol information, length information, and/or SLIV described in Table 3. When aggregated time period(s) are used for sidelink communication, the time aggregation level may indicate the number of time periods allocated by the SCI. The time aggregation level included in the SCI may indicate one time aggregation level among time aggregation levels configured by higher layer signaling. When higher layer signaling indicates one time aggregation level, the SCI may not include the time aggregation level. In this case, sidelink communication between the first terminal and the second terminal may be performed based on the time aggregation level configured by higher layer signaling.

When aggregated frequency period(s) are used for sidelink communication, the frequency aggregation level may indicate the number of frequency bands allocated by the SCI. The frequency aggregation level included in the SCI may indicate one of the frequency aggregation levels configured by higher layer signaling. When higher layer signaling indicates one frequency aggregation level, the SCI may not include the frequency aggregation level. In this case, sidelink communication between the first terminal and the second terminal may be performed based on the frequency aggregation level configured by higher layer signaling. When both the aggregated time period(s) and the aggregated frequency band(s) are used for sidelink communication, one time aggregation level and one frequency aggregation level may be indicated based on the above-described scheme.

The retransmission scheme information included in the SCI may indicate N/A, chase combining, or IR. When the retransmission scheme information is indicated by higher layer signaling, the SCI may not include the retransmission scheme information. The resource pool information included in the SCI may indicate one resource pool among the resource pools defined in Table 4, one resource pool among the resource pools defined in Table 7, or one resource pool among the resource pools defined in Table 9. The resource pools defined in Table 4, the resource pools defined in Table 7, and/or the resource pools defined in Table 9 may be configured by higher layer signaling. When one resource pool is indicated by higher layer signaling, the SCI may not include the resource pool information.

The time aggregation pattern included in the SCI may indicate one time aggregation pattern among the time aggregation patterns defined in Table 5. The time aggregation patterns defined in Table 5 may be configured by higher layer signaling. When one time aggregation pattern is indicated by higher layer signaling, the SCI may not include the time aggregation pattern. The frequency aggregation pattern included in the SCI may indicate one frequency aggregation pattern among the frequency aggregation patterns defined in Table 8. The frequency aggregation patterns defined in Table 8 may be configured by higher layer signaling. When one frequency aggregation pattern is indicated by higher layer signaling, the SCI may not include the frequency aggregation pattern. The time/frequency aggregation pattern included in the SCI may indicate one time/frequency aggregation pattern among the time/frequency aggregation patterns defined in Table 10. The time/frequency aggregation patterns defined in Table 10 may be configured by higher layer signaling. When one time/frequency aggregation pattern is indicated by higher layer signaling, the SCI may not include the time/frequency aggregation pattern.

The first terminal may transmit the SCI to the second terminal on a sidelink channel (e.g., PSCCH and/or PSSCH) (S1404). The second terminal may receive the SCI from the first terminal by performing a monitoring operation (e.g., blind decoding operation) on the sidelink channel (e.g., PSCCH and/or PSSCH), and may identify information element(s) included in the SCI (e.g., information element(s) defined in Table 11)

The first terminal may transmit data to the second terminal in sidelink resources (e.g., PSSCH) indicated by the SCI (S1405). The sidelink resources may be indicated by the sidelink configuration information received in the step S1402 and/or the SCI received in the step S1404. When the time aggregation level is 2, the first terminal may transmit the data to the second terminal on PSSCHs within the time periods #n and #m indicated by the SCI in the exemplary embodiment shown in FIG. 8, and the second terminal may receive the data from the first terminal on the PSSCHs within the time periods #n and #m. When the frequency aggregation level is 3, the first terminal may transmit the data to the second terminal on the PSSCHs within the frequency bands #i, #o, and #p indicated by the SCI in the exemplary embodiment shown in FIG. 12, and the second terminal may receive the data from the first terminal on the PSSCHs within the frequency bands #i, #o, and #p.

When the time aggregation level is 3 and the frequency aggregation level is 2, the first terminal may transmit the data to the second terminal on the PSSCHs within the resource regions A to F indicated by the SCI in the exemplary embodiment shown in FIG. 13, the second terminal may receive the data from the first terminal on the PSSCHs within the resource regions A to F. In the above-described data transmission procedure, the same data may be retransmitted. In this case, the second terminal may perform a data combining operation based on the retransmission scheme (e.g., chase combining scheme) indicated by higher layer signaling, MAC signaling, and/or PHY signaling. In addition, when the data is transmitted in the IR scheme in the above-described data transmission procedure, the second terminal may perform a data combining operation based on the retransmission scheme (e.g., IR scheme) indicated by higher layer signaling, MAC signaling, and/or PHY signaling.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a first terminal in a communication system, the operation method comprising:
generating sidelink control information (SCI), the SCI including a time aggregation level indicating n time periods, time resource allocation information indicating time resources used for transmission of data within the n time periods, and frequency resource allocation information;
transmitting the SCI to a second terminal; and
transmitting the data to the second terminal on a physical sidelink shared channel (PSSCH) composed of the time resources and frequency resources indicated by the frequency resource allocation information,
wherein n is a natural number equal to or greater than 1.

2. The operation method according to claim 1, wherein a plurality of time aggregation levels are configured by higher layer signaling, and the time aggregation level included in the SCI is one of the plurality of time aggregation levels.

3. The operation method according to claim 1, wherein the time resource allocation information includes at least one of an index of a start symbol of the time resources or information indicating a length of the time resources.

4. The operation method according to claim 1, wherein the frequency resource allocation information includes at least one of an index of a start resource block (RB) of the frequency resources or information indicating a number of RBs constituting the frequency resources.

5. The operation method according to claim 1, wherein a time offset exists between the n time periods in time domain, and the time offset is set by higher layer signaling.

6. The operation method according to claim 1, wherein the SCI further includes a frequency aggregation level indicating p frequency bands, the frequency resources are located within the p frequency bands, and p is a natural number equal to or greater than 1.

7. The operation method according to claim 6, wherein a plurality of frequency aggregation levels are configured by higher layer signaling, and the frequency aggregation level included in the SCI is one of the plurality of frequency aggregation levels.

8. The operation method according to claim 6, wherein a frequency offset exists between the p frequency bands in frequency domain, and the frequency offset is set by higher layer signaling.

9. The operation method according to claim 1, wherein each of the n time periods is one slot, and the frequency resources are a resource block (RB) set.

10. The operation method according to claim 1, wherein the SCI further includes information indicating a retransmission scheme of the data, and the retransmission scheme is a chase combining scheme or an incremental redundancy (IR) scheme.

11. An operation method of a first terminal in a communication system, the operation method comprising:
generating sidelink control information (SCI), the SCI including time resource allocation information, a frequency aggregation level indicating p frequency bands, and frequency resource allocation information indicating frequency resources used for transmission of data within the p frequency bands;
transmitting the SCI to a second terminal; and
transmitting the data to the second terminal on a physical sidelink shared channel (PSSCH) composed of the frequency resources and time resources indicated by the time resource allocation information,
wherein p is a natural number equal to or greater than 1.

12. The operation method according to claim 11, wherein a plurality of frequency aggregation levels are configured by higher layer signaling, and the frequency aggregation level included in the SCI is one of the plurality of frequency aggregation levels.

13. The operation method according to claim 11, wherein a frequency offset exists between the p frequency bands in frequency domain, and the frequency offset is set by higher layer signaling.

14. The operation method according to claim 11, wherein the frequency resource allocation information includes at least one of an index of a start resource block (RB) of the frequency resources or information indicating a number of RBs constituting the frequency resources.

15. An operation method of a first terminal in a communication system, the operation method comprising:
receiving, from a base station, a higher layer message including a time aggregation level indicating n time periods;
generating sidelink control information (SCI), the SCI including time resource allocation information indicating time resources used for transmission of data within the n time periods indicated by the time aggregation level, and frequency resource allocation information;
transmitting the SCI to a second terminal; and
transmitting the data to the second terminal on a physical sidelink shared channel (PSSCH) composed of the time resources and frequency resources indicated by the frequency resource allocation information,
wherein n is a natural number equal to or greater than 1.

16. The operation method according to claim 15, wherein the higher layer message further includes a frequency aggregation level indicating p frequency bands, the frequency resources are located within the p frequency bands, and p is a natural number equal to or greater than 1.

17. The operation method according to claim 16, wherein the time aggregation level and the frequency aggregation level are configured for each resource pool, and configuration information of the resource pool is included in the higher layer message.

18. The operation method according to claim 15, wherein the higher layer message further includes at least one of an index of a start symbol of the time resources, information indicating a length of the time resources, a time offset between the n time periods, or combinations thereof.

19. The operation method according to claim 16, wherein the higher layer message includes at least one of an index of a start resource block (RB) of the frequency resources, information indicating a number of RBs constituting the frequency resources, a frequency offset between the p frequency bands, or combinations thereof.

20. The operation method according to claim 15, wherein the higher layer message further includes information indicating a retransmission scheme of the data, and the retransmission scheme is a chase combining scheme or an incremental redundancy (IR) scheme.
